# EUROPEAN PATENT SPECIFICATION

(11) **EP 0 864 151 B1**
(45) Date of publication and mention of the grant of the patent: **17.07.2002**
(21) Application number: 96940222.1
(22) Date of filing: 26.11.1996
(51) Int. Cl.: G11B 7/26, B05C 13/02

(54) **A MACHINE FOR MANUFACTURING COMPACT DISCS, FOR INSTANCE**
MASCHINE ZUR HERSTELLUNG VON Z.B. COMPACT DISCS
MACHINE POUR FABRIQUER DES DISQUES COMPACTS

(30) Priority: 27.11.1995 SE 9504226
(43) Date of publication of application: 16.09.1998
(73) Proprietor: M2 Engineering AB, 163 91 Spanga (SE)
(72) Inventor: OLIN, Stefan, S-126 56 Hägersten (SE)
(74) Representative: Nilsson, Karl Ingvar
(86) International application number: SE9601542
(87) International publication number: WO9720313

(56) References cited:
- EP-A- 0 574 975
- DE-A- 4 235 676
- DE-C- 3 629 045
- DE-C- 3 720 525

## Description

The present invention relates to a machine for manufacturing compact discs, for instance. More specifically, the invention relates to a machine for carrying out a plurality of manufacturing stages included in a complete manufacturing process.

### DESCRIPTION OF THE BACKGROUND ART

Commercially available systems for the manufacture of compact discs comprise a number of different solutions, all of which are based on either commercially available OEM components with incorporated standard solutions, or are based on own solutions that often include several separate pneumatic functions, manipulators or one or two industrial robots.

A plurality of separate pneumatic functions, manipulators or industrial robots engenders large investment costs, increased maintenance, a multiple of fault or error sources, difficult defect checking work and the storage of large numbers of spare parts. The object of the present invention is to eliminate this drawback.

### DISCLOSURE OF THE INVENTION

A machine of the aforesaid kind includes a central manipulator having a plurality of radially and outwardly extending manipulator arms. The manipulator is constructed to carry out reciprocating rotary movements in a first plane and lifting and lowering movements in a second plane that is perpendicular to the first plane, in accordance with a predetermined program that controls the manufacturing process. The manipulator arms are intended to move discs successively from position to position into program determined specific working locations required for carrying out the manufacturing stages of the manufacturing process.

According to the invention, the central manipulator is intended to coact with an internal manipulator mounted in a vacuum chamber through the medium of one of the manipulator arms, for carrying out a vacuum-requiring manufacturing stage in the full manufacturing process. These and other characteristic features of an inventive machine are evident from the following Claims.

### BRIEF DESCRIPTION OF THE DRAWINGS

The invention will now be described in more detail with reference to the accompanying schematic drawings, in which
Fig. 1 illustrates the machine from above; and
Fig. 2 is a sectional side view of a part of a manipulator arm and vacuum sluice included in the machine shown in Fig. 1.

### DETAILED DESCRIPTION OF THE PREFERRED EMBODIMENTS

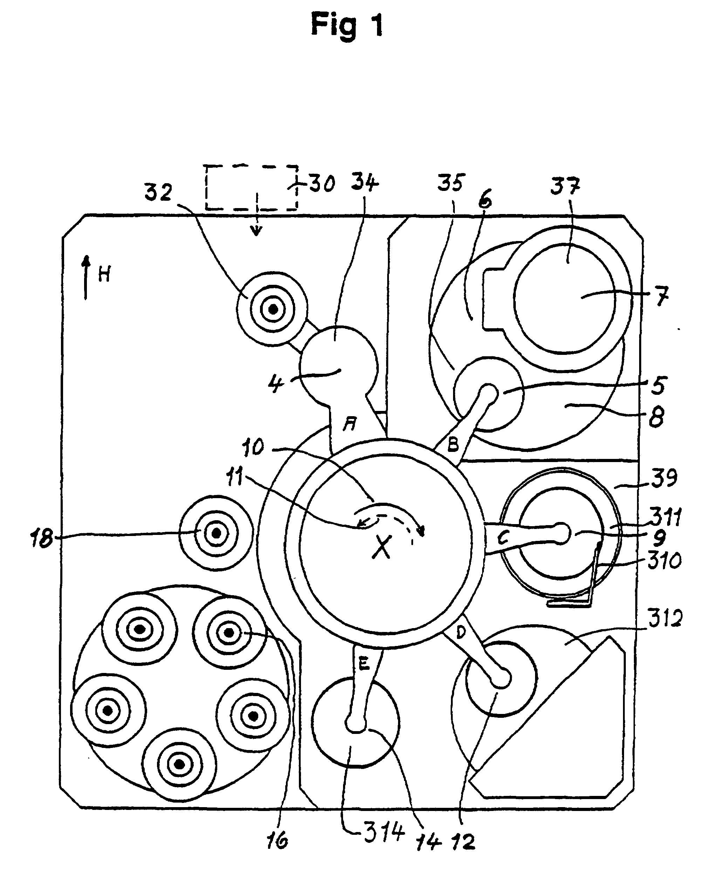

Fig. 1 illustrates a central manipulator X that includes a plurality (5) of radially and outwardly extending manipulator arms A, B, C, D, E. The central manipulator is constructed to perform forward (clockwise) and backward (counter-clockwise) rotary movements, see the full arrow 10 and broken arrow 11 respectively, in a first plane h (horizontal) and lifting and lowering movements in a second plane v (vertical) perpendicular to the first plane in accordance with a predetermined program that controls a compact disc manufacturing process. The manipulator arms A-E are constructed to move discs successively from respective positions to respective program-determined working locations necessary for carrying out successively the manufacturing stages of the working process. The various positions are referenced 4, 5, 6, 7, 8, 9, 12, 14, 16 and 18. Some of the manufacturing stages will now be described to some extent.

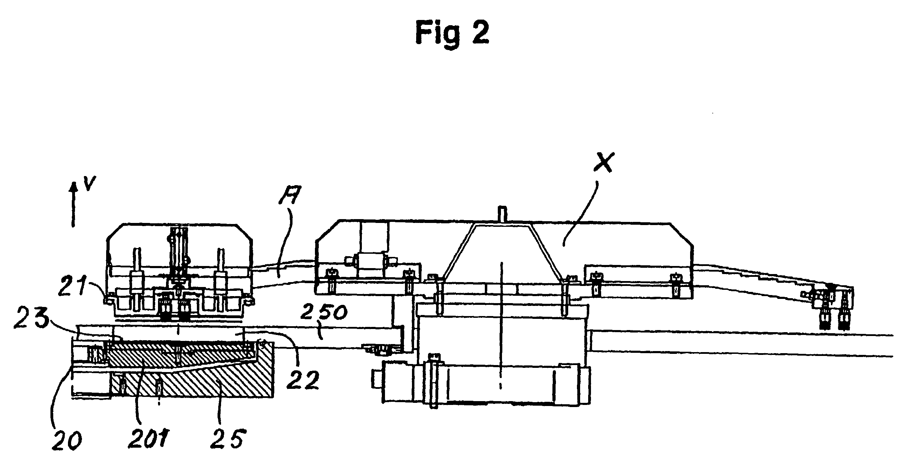

The manipulator arm A located in position 4 in Fig. 1 is indexed to position 5, wherewith a CD-blank is moved from position 4 to position 5 with the aid of suction cups and deposited in said position 5. In position 5, the arm also has a function in which it coacts with a vacuum sluice 21-22-23 leading to a vacuum chamber 25, which will be described in more detail with reference to Fig. 2.

As the arm A is moved from position 4 to position 5:
o the arm B is moved from position 5 to position 9 while carrying an aluminium coated disc;
o the arm C is moved from position 9 to position 12, while carrying an aluminium coated disc that has a protective lacquer layer over the aluminium coating;
o the arm D is moved from position 12 to position 14 while carrying a disc that has been hardened, or cured, with strong ultraviolet light in position 12; and
o the arm E moves from position 14 to position 16 while carrying a disc that has been checked in position 14 with respect to faults, errors, damage and/or cosmetic defects. The disc has herewith been found acceptable. If, on the other hand, the disc has been found unacceptable, the arm E is swung out to position 18 with the aid of a pneumatic piston-cylinder device mounted on the central manipulator X.

As will be evident from Fig. 2, the outer end of the manipulator arm A carries an upper, detachably mounted part 21 of a vacuum sluice 21-22-23 and is adapted to deposit the upper part 21 onto an intermediate part 22 of the vacuum sluice in a predetermined position, namely position 5, wherein subsequent to being lowered, said intermediate part forms an integral part of a chamber lid 250 of the vacuum chamber 25. The chamber accommodates an internal manipulator 20 for carrying out a vacuum-requiring manufacturing stage in the full manufacturing process. The manipulator 20 has four arms and includes an arm 201 whose outer end is provided with a fixed part 23 which forms a lower movable part in the vacuum sluice 21-22-23.

With the aid of a system of valves for vacuum pumping and increasing the pressure in the vacuum sluice 21-22-23, the arm A delivers a disc in the intermediate part 22, the arm 201 captures and transports the disc to a waiting station in position 6 in the chamber 25 and further to a position 7 for coating with aluminium by cathode sputtering, and further to a waiting station 8 and finally back to position 5, where the arm B is now located and takes the disc to position 9; see Fig. 1.

As already indicated, in addition to participating in the rotary movement of the central manipulator X in one direction to a given position, namely position 16, one of the arms of the central manipulator X, namely the arm E, also performs an individual rotary movement to a subsequent position 18, provided that the program delivers a separate impulse that indicates that the disc in question has not been found acceptable in the check carried out in position 14.

## Claims

1. A machine for manufacturing compact discs for instance, which is adapted to carry out a plurality of manufacturing stages included in a full manufacturing process, wherein the machine comprises a central manipulator (X) having a plurality of radially and outwardly extending manipulator arms (A, B, C, ... E), wherein the central manipulator (X) is adapted to carry out reciprocating rotary movements in a first plane (h) and lifting and lowering movement in a second plane (v) perpendicular to the first-mentioned plane in accordance with a predetermined program that controls the manufacturing process, and wherein the manipulator arms (A, B, C, ... E) are intended to move discs successively from position (e.g. 4) to position (5) to working locations that are determined by said predetermined program and that are necessary for carrying out successively the manufacturing stages of the manufacturing process, **characterized in that** the outer end of one (A) of the manipulator arms (A-E) detachably carries a part (21) of a vacuum sluice (21-22-23) and is adapted to deposit said upper part (21) onto an intermediate part of the vacuum sluice in a predetermined position (5) and after being lowered, wherein the intermediate part (22) forms an integral fixed part of a chamber lid (250) of a vacuum chamber (25) which accommodates a multi-arm, inner manipulator (20) which in one (24) of the outer ends (241) of its manipulator arms carries a lower part (23) of the vacuum sluice (21-22-23) and which is adapted to carry out a vacuum-requiring manufacturing stage in the complete manufacturing process.

2. A machine according to Claim 1, **characterized in that** in addition to participating in the rotary movement of the central manipulator (X) in one direction to a given position (16), one (E) of the manipulator arms (A-E) of the central manipulator (X) also performs an individual rotary movement to a subsequent position (18) in response to a separate impulse from said program.

## Patentansprüche

1. Maschine zur Herstellung von zum Beispiel von Compact Disks, die ausgerüstet ist zur Ausführung einer Mehrzahl von Fertigungsstufen in einem vollständigen Fertigungsprozess und einen zentralen Manipulator (X) umfasst, der eine Mehrzahl von radial und auswärts ausschwenkbaren Manipulatorarmen (A, B, C, ..., E) aufweist, wobei der zentrale Manipulator (X) ausgerüstet ist, um gegenläufige Rotationsbewegungen in einer ersten Ebene (h) und Auf- und Abbewegungen in einer zweiten, rechtwinklig zur erstgenannten Ebene ausgerichteten Ebene (v) entsprechend einem vorbestimmten, den Fertigungsprozess steuernden Programm auszuführen, und wobei die Manipulatorarme (A, B, C, ..., E) Disks aufeinander folgend aus einer Position (z. B. 4) zu einer Position (5) bewegen in Arbeitspositionen, von dem Programm vorbestimmt, und notwendig sind, um aufeinander folgende Fertigungsstufen des Fertigungsprozesses auszuführen, **dadurch gekennzeichnet, dass** das äußere Ende von einem (A) der Manipulatorarme (A-E) ein abnehmbares Teil (21) einer Vakuumschleuse (21-22-23) trägt und ausgerüstet ist, um das obere Teil (21) auf einem Zwischenteil der Vakuumschleuse in einer vorbestimmten Position (5) nach einem Absenkvorgang abzulegen, wobei das Zwischenteil (22) ein inneres festes Teil eines Kammerdeckels (250) einer Vakuumkammer (25) bildet, die einen mehrarmigen inneren Manipulator (20) umfasst, der an einem (24) der äußeren Enden (241) seiner Manipulatorarme ein tieferes Teil (23) einer Vakuumschleuse (21-22-23) trägt und so ausgebildet ist, um eine ein Vakuum erfordernde Fertigungsstufe in dem gesamten Herstellungsprozess auszuführen.

2. Maschine nach Anspruch 1, **dadurch gekennzeichnet ist, dass** einer (E) der Manipulatorarme (A-E) des zentralen Manipulators (X) zusätzlich zur Rotationsbewegung des zentralen Manipulators (X) in Richtung einer vorbestimmten Position auch in eine eigenständige Rotationsbewegung zu einer nachfolgenden Position (18) als Erwiderung auf ein separates Signal des Programms versetzbar ist.

## Revendications

1. Machine pour fabriquer, par exemple, des disques compacts, qui est conçue pour mettre en oeuvre une pluralité d'étapes de fabrication incluses dans un procédé de fabrication global, où la machine comprend un manipulateur central (X) qui possède une pluralité de bras manipulateurs (A, B, C, ... E), s'étendant dans la direction radiale et vers l'extérieur, le manipulateur central (X) étant conçu pour effectuer des mouvements rotatifs en va-et-vient dans un premier plan (h), et des mouvements de soulèvement et d'abaissement dans un deuxième plan (v), perpendiculaire au premier plan mentionné, selon un programme prédéterminé qui commande le procédé de fabrication, et les bras manipulateurs (A, B, C, ... E) étant destinés à déplacer des disques successivement d'une position (par exemple, 4) à une position (5), situées à des postes de travail qui sont déterminés par ledit programme prédéterminé, et qui sont nécessaires pour mettre successivement en oeuvre les étapes de fabrication du procédé de fabrication, **caractérisée en ce que** l'extrémité extérieure de l'un (A) de bras manipulateurs (A-E) transporte de manière détachable une partie (21) d'un sas d'étanchéité de vide (21-22-23) et est conçue pour déposer ladite partie supérieure (21) sur une partie intermédiaire du sas d'étanchéité de vide, à une position prédéterminée (5), et, après avoir été abaissée, la partie intermédiaire (22) formant une partie intégrante fixe d'un couvercle de chambre (250) d'une chambre à vide (25), qui contient un manipulateur intérieur (20) à plusieurs bras, qui, à l'une (24) des extrémités extérieures (241) de ses bras manipulateurs, transporte une partie inférieure (23) du sas d'étanchéité de vide (21-22-23), et qui est conçu pour la mise en oeuvre d'une étape de fabrication du procédé de fabrication complet qui nécessite le vide.

2. Machine selon la revendication 1, **caractérisée en ce que**, en plus de participer au mouvement rotatif du manipulateur central (X) dans un sens, jusqu'à une position donnée (16), l'un (E) des bras manipulateurs (A-E) du manipulateur central (X) effectue également un mouvement rotatif individuel jusqu'à une position suivante (18), en réponse à une impulsion distincte délivrée par ledit programme.
